# EUROPEAN PATENT SPECIFICATION

(11) **EP 4 004 398 B1**
(45) Date of publication and mention of the grant of the patent: **30.08.2023**
(21) Application number: 20760569.2
(22) Date of filing: 23.07.2020
(51) Int. Cl.: F16F 5/00, F16F 9/02, F16F 9/32

(54) **GAS SPRING**
GASFEDER
RESSORT A GAZ

(30) Priority: 24.07.2019 IT 201900012786
(43) Date of publication of application: 01.06.2022
(73) Proprietor: CAPPELLER FUTURA SRL, 36050 Cartigliano (VI) (IT)
(72) Inventor: CAPPELLER, Alessandro, 36050 CARTIGLIANO (VI) (IT)
(74) Representative: De Filippis, Sara
(86) International application number: PCT/IT2020/050183
(87) International publication number: WO 2021/014478

(56) References cited:
- EP-A1- 0 826 898
- EP-A1- 3 098 474
- US-A- 4 550 899
- US-A- 4 702 463

## Description

This invention relates to a gas spring.

This invention is part of the broader field of producing moulded components, e.g. metal or plastic moulded components, which often requires making specially made tools and moulds.

It is customary to use standardised elements in the construction of such moulds, such as guides, screws, special square wire springs and gas springs (also commonly called nitrogen cylinders).

In particular, gas springs usually comprise:
- a fixed external body, called a cylinder or jacket, for example;
- a movable component, also called a stem;
- a guide bushing for the stem;
- seals;
- an element for loading the gas into the cylinder, also called a loading valve.

At present, considerable efforts are being made to improve the efficiency of thrust elements in general; the aim is to maximise the force exerted by a spring, while at the same time trying to limit its size (and, consequently, the size and travel of the movable parts).

In many applications, gas springs have supplanted conventional square wire springs, since, unlike the latter, they do not require a very long travel to exert a significant force; rather, their response is almost immediate, with a force proportional to the pressure and the useful surface on which the gas acts.

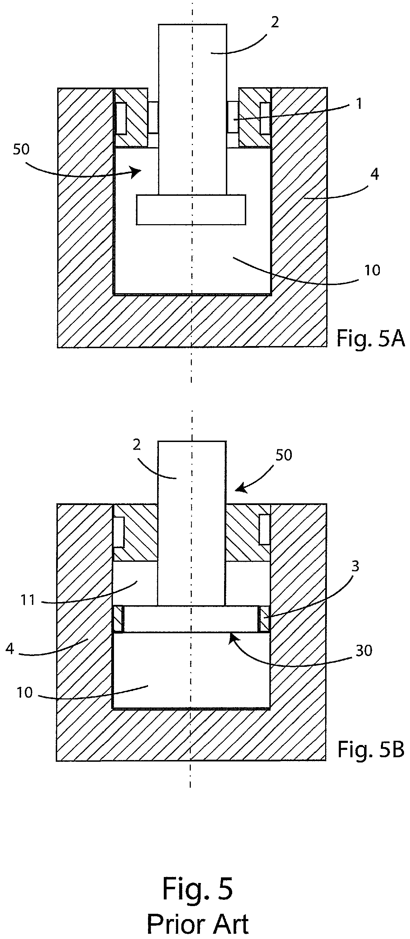

To date, the most widely used gas springs operate in two different ways; the first, shown in Figure 5A, uses the seal between a seal 1 and the external surface of a stem 2; the second, shown in Figure 5B, is based on the seal between a seal 3 and the internal surface of a jacket 4.

More in detail, both variants generally comprise a piston 50 constrained to slide inside a chamber 4: in the first, defined here as "stem seal", the constrained surface, i.e. the surface in contact with the seals 1, is the external surface of the stem 2 of the piston 50; in the second, defined here as "jacket seal" although in technical jargon it is known as "piston seal", the seal 3 is placed on the external diameter of the piston 50 itself, which slides in the jacket 4.

The advantages and disadvantages of the two variants are well known in the sector: in the stem seal spring, the useful surface on which the gas pressure can exert a force proportional to the section of the stem 2 itself; in other words, the walls of the chamber 4 remain fixed during the spring operation, and it is the piston 50 itself which, as it enters the chamber 4, reduces the volume 10 available to the gas, thus increasing the pressure exerted.

In the jacket seal spring on the other hand, a wall of the chamber 4 consists of the top 30 of the piston 50, similar to the operation of the pistons in internal combustion engines; the reduction of the volume 10 of the chamber 4, caused by the sliding of the piston 50 itself, generates the increase in gas pressure, which in this case, acts on the entire area of the top 30 of the piston 50.

It is clear that, overall dimensions being equal, the jacket seal springs are able to exert greater force than stem seal springs due to the greater useful surface area on which the gas can act: however, the main drawbacks typical of this type of spring are linked to the life of the sealing components and the greater pressures that develop in the chambers.

In order to ensure good functioning and low wear of the seals and sliding surfaces, it is necessary for these sliding surfaces, intended to be in contact with the seals themselves, have a high degree of surface finish and hardness.

As is well known in the field of surface treatments, it is much easier to obtain high grade finishes on external surfaces than on internal surfaces; the same criterion is applied in the execution of hardening treatments, for example nitriding.

As a result, the performance in terms of durability of stem seal springs is much greater than that of jacket seal springs, since it is much easier to machine the external surface of the stem of a piston or apply surface treatments to it than the internal surface of a hollow cylinder, i.e. a jacket.

In addition, in the case of jacket seal springs of the known type, the ratio between the volume of the chamber in the initial compression phase and that in the final phase is very high compared to the values obtained with the stem seal. As a result, the final pressures and temperatures reach critical values that compromise the integrity of the seals and consequently the seal of the cylinder in the long term.

Currently, the pressure can be decreased in two ways, i.e. by limiting the amount of gas introduced into the chamber or by limiting the extension of the travel of the two coupled elements.

However, this forces manufacturers, in the first case, to oversize the springs so that they can develop the same force with less pressure, while in the second case, to design them to compensate for the shorter travel length available.

A further cause of deterioration and loss of performance of gas springs is the presence in the working environment of liquids, such as lubricating oils and the like; any surfaces exposed to the environment could therefore be covered with these substances.

This is a significant problem, in fact, both in stem seal springs and jacket seal springs, the piston stem is usually in contact with components such as guide bands or stem scrapers, or with real seals; consequently, when the piston is loaded and starts to reduce the volume of the chamber, its sliding creates a depression at the interface between the stem and the contact component, which favours the entry of any oil particles or liquids deposited nearby.

This problem is more evident in jacket seal springs because when the piston moves, an additional volume is created at the opposite side of the chamber, between the piston itself and the guide band: as a consequence, a depression is generated in this space, which can recall oils or other substances, which, by subtracting useful volume, would lower the efficiency of the spring and even damage it over time.

The volume subtracted by the oils also generates an increase in gas pressure inside the chamber, which can be very dangerous during operation.

In addition, a typical problem of both variants is the seal between the stem and the chamber; since the stem is exposed to the external environment, oils or other substances may act as carriers for solid particles, such as dust or other materials, which can then penetrate the interface or inside the chamber, scratching the delicate sliding surfaces or otherwise affecting them.

Although there are devices available on the market which are capable of limiting this inconvenience, they are nevertheless additional components and separate from the spring itself, for example casings or protection devices applicable at the top so as to shelter the sliding interfaces.

To sum up, size being equal, while on the one hand jacket seal springs are capable of developing greater forces than stem seal springs, they are also much more susceptible to wear, which considerably reduces their average life.

The need therefore remains for a gas spring with improved durability, while at the same time being able to exert greater forces than currently achievable standards.

Some examples of gas springs with the described disadvantages typical of the known technique can be found in documents US4550899A, EP0826898A1 and EP3098474A1. Moreover, the document US 4 702 463 A discloses a gas spring comprising the features of the preamble of claim 1.

The main aim of this invention is therefore to provide a gas spring that solves the above-mentioned drawbacks by combining the respective advantages of the two described embodiments in a single device.

Another aim of the invention is to make a gas spring with improved characteristics that is equally simple and economical to produce.

Additionally, an objective of this invention is to provide a more reliable gas spring that is capable of working at lower average operating pressures, force exerted being equal, to the benefit of safety.

Advantageously, this is achieved by means of a spring designed to provide two communicating pressure chambers in two mutually sliding elements so that the pressure increase due to compression can be accommodated more easily.

Another objective of this invention is to prevent the entry of contaminants into the chamber of a gas spring without resorting to fastening external accessories.

The object of the present invention is therefore a gas spring comprising the features of claim 1.

In this way it is possible to obtain a more efficient and safer gas spring as the gas pressure is distributed in the two communicating chambers, while the seal improves due to the higher finish of the external walls and the better distribution of the pressure itself.

Additionally, the spring may comprise a first loading valve for loading a gas into the spring, placed in a second internal surface of the first element.

In a further preferred embodiment, the limit is integral with the second element.

In addition, the spring may comprise first guiding means for guiding the limit, placed between the stem of the limit and the second opening of the first element, and second guiding means for guiding the second element, placed at the first opening.

A further preferred embodiment of the gas spring may comprise a second loading valve in the second element.

In this case, the second element may comprise channels for connecting the second loading valve with the first chamber.

The present invention is now described, by way of example and without limiting the scope of the invention, with reference to the accompanying drawings which illustrate preferred embodiments of it, wherein:
Figure 1 is a sectional view of a first embodiment of the gas spring according to the invention;
Figure 2 is a schematic cross-section view of the gas spring in Figure 1;
Figure 3 shows a sectional view of a second non-claimed embodiment of the gas spring according to the invention;
Figure 4 shows a sectional view of a third embodiment of the gas spring according to the invention;
Figures 5A and 5B show gas springs belonging to the known technique.

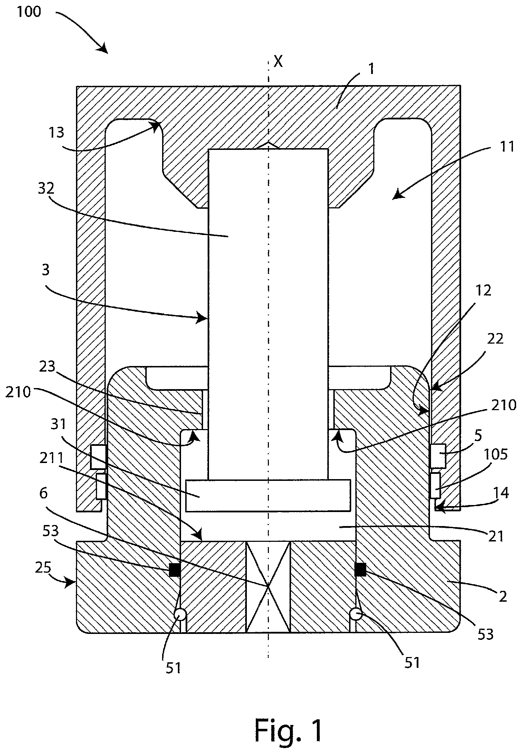

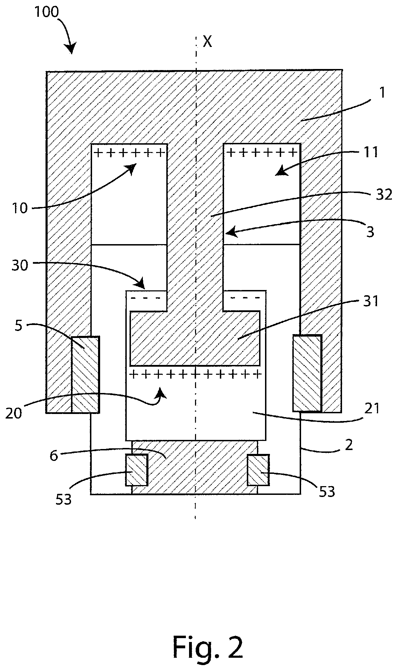

With reference to Figures 1 and 2, the gas spring according to the invention, generically indicated with 100, comprises a hollow sliding element 1, provided with a first opening 14 that faces a first chamber 11, inside which a guide 2 is positioned, it also hollow; the first seals or sealing means 5 are placed on the internal surface 12 of the sliding element 1, facing the external surface 22 of the guide 2.

A piston 3 is placed in the first chamber 11 of the sliding element 1, acting as limit, in order to prevent the sliding element 1-guide 2 system from slipping out; this piston 3 is provided with a head 31 and a stem 32; the latter is integral with a first wall 13 of the first chamber 11 in the position opposite to the first opening 14.

The guide 2 serves as a constraint for the sliding of the stem 32 through a second opening 23, oriented towards the chamber 11, obtained at the top of the guide 2.

The head 31 is instead constrained to slide in a second chamber 21 of the guide 2, and its diameter is greater than that of the stem 32; operatively, therefore, once the guide 2 is inserted into the sliding element 1, piston 3 is inserted into and fixed to the first wall 13.

In any case, the first opening 14 has dimensions substantially corresponding to the first wall 13 so that the sliding element 1 is without a base and the seals 5 between the external walls 22 of the guide and the slider 1 itself are directly on the internal wall 12 of the latter.

In other words, the first opening 14 is made in such a way that the slider 1 is completely bottomless; bottomless here means that the vertical walls 12 do not have any element projecting therefrom (apart from any seals or guiding means).

This advantageously results in a spring with a highly space-saving configuration that is smooth in operation and eliminates many of the drawbacks of the known technique.

First of all, the fact that one element is placed above the other and slides on its external surface at the same time allows simplifying the design of the spring and increasing its durability and safety.

In fact, a spring thus designed is easy to build and assemble as it eliminates the complicated sealing interactions between the seals usually fixed to the external wall of the piston and the internal wall of the chamber.

In addition, the position and sliding mode of the upper element (in this case slider 1) on the external surface of the other element (the guide 2) creates protection against contaminants entering the chamber which is integrated with the spring, and is much more efficient and easier to implement than other solutions adopted in the known technique.

In further embodiments, the function of the head 31 can be performed by different elements, such as profiles and/or edges obtained on the surface of the stem 32 and/or chamber 21, which can in any case prevent the stem 32 from completely coming out of chamber 21 during the expansion of the gas spring.

In this way, the sliding element 1 is constrained to move along the axis X of the guide 2 in relation to the latter.

In the case of the embodiments shown in the drawings, which provide the presence of the piston 3, the travel is determined by the distance between the first abutments 210 of the chamber 21, in particular provided in the upper surface of the guide 2, and the head 31 of the piston 3, or between a second wall 211, opposite to such first abutments 210 and the head 31 itself.

In other words, the excursion of the head 31 in the chamber 21 between the wall 211 and the abutments 210 can determine the travel of the sliding element 1 along the external surface 22 of the guide 2.

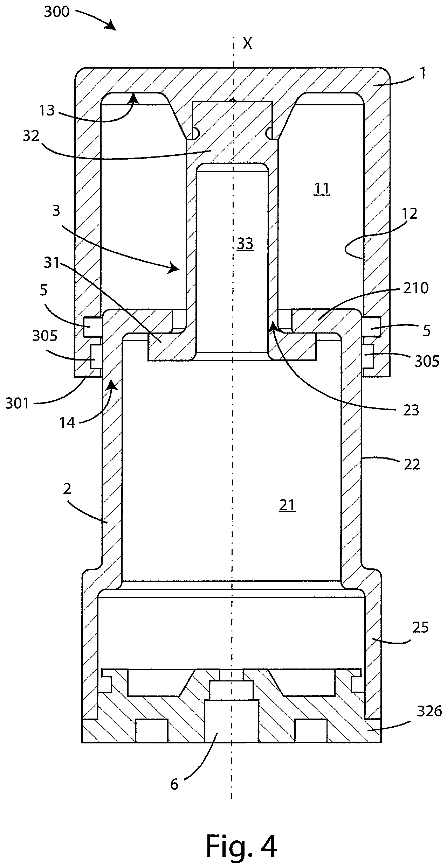

In alternative embodiments, wherein the piston 3 is absent, or in which its extension is in any case less than that of the guide 2 along the axis X (Figure 4), the wall 13 of the sliding element can act as the lower limit, stopping its travel at the abutments 210 of the upper surface of the guide 2.

Moreover, there is inserted, on wall 211, a loading valve 6 for injecting the gas into the chambers 21 and 11, held in position by a locking ring 51.

There may be second seals or sealing means 53 on the sealing surfaces of valve 6 inside the chamber 21.

The total volume available to the gas therefore, is formed by both chambers 11 and 21, which are placed in communication by the existing play between the stem 32 of the piston 3 and the second opening 23.

The operation of the gas spring 100 is based on the reciprocal sliding between the sliding element 1 and the guide 2, and between the stem 32 and the second opening 23; Figure 2 shows, in a schematic way to increase its intelligibility, the surfaces on which the gas pressure contained in chambers 11 and 21 exerts its force.

Specifically, these surfaces are:
- a first surface 10, belonging to the sliding element 1, on which the gas exerts a positive force (indicated by the + references); the area on which the gas pressure exerts a force is equal to the internal area of sliding element 1 itself minus the area of the stem 32;
- a second surface 20, belonging to the head 31 of piston 3, facing in the same direction as the first surface 10, on which the gas exerts an equally positive force; the area available to the gas is equal to the area of the top of the piston 3;
- a third surface 30, it also belonging to the head 31 but facing in the opposite direction to the surfaces 10 and 20; consequently, the contribution given by the force exerted on it by the gas (indicated by the references -) will have the opposite direction to the first two contributions, and will be calculated on the area of the top of the piston 3 minus the area of the stem 32.

The sum of the contributions of the three surfaces 10, 20 and 30 therefore, will be equivalent to a force exerted by the gas on an area equal to the internal area of the sliding element 1; this advantageously allows obtaining load values comparable to those bearable by a gas spring of the jacket seal type.

In addition, a solution designed in this way also makes it possible to take advantage of the advantages of the stem seal configuration; in fact, since the internal wall 12 of the sliding element 1 and the external wall 22 of the guide 2 are the only sliding surfaces, it is possible to couple them in the same convenient way used in the stem seal variant, which provides, as mentioned above, the use of seals 5 at the interface between the two.

In the "jacket seal" springs of the known technique, the sealing means are housed on the side surface of a piston, which looks like a relatively small element that slides on the internal walls of a chamber.

Moreover, once compressed, the piston always has one face facing the inside of the chamber and one facing the intermediate vacuum environment.

In the spring according to this invention, the reduced surface area of the piston is replaced by the larger surface area of the guide 2, facilitating reciprocal sliding and minimizing the probability of breakdowns or malfunction.

In addition, in the gas spring according to the invention, the interface at the sealing means is exposed at all times to the pressure of the chamber on the one hand and the pressure of the external environment on the other.

The total pressure difference at the interface therefore, is smaller, and this ensures a better seal, greater safety and also allows reducing the size of the seals to be installed.

The sliding element 1, sliding outside the guide 2, protects the sliding surface, which is represented by the external surface 22 of the guide 2 in the embodiment described.

In this way, the depression phenomenon typical of jacket springs is eliminated and the possibility of particles and/or undesired substances creeping into chambers 11 and 21 is minimized.

Moreover, this solution makes it possible to carry out mechanical surface finish machining on the external surface 22 of the guide 2 in a simpler way than the machining of the internal walls, and with the possibility of obtaining higher degrees of finish.

A gas spring of the type described has the additional advantage of also exploiting the external surface of the cylinder to increase the seal of the chamber; consequently, the average working pressure and the relative developed temperature are lower with respect to known springs, developed force being equal.

This, on the one hand, increases safety during spring operation and, on the other hand, allows for more compact springs.

In addition, the guide 2 may have a larger base 25 than the external surface 22 to act as the second limit of the slider 1 in order to further protect the gap between the external surface 22 of the guide 2 and the internal surface 12 of slider 1 itself. In fact, in this way the sliding of the slider is interrupted at a certain distance from the support surface (equal to the height of the base of the guide) and, even in the presence of any oil or other elements on the surface, their entry into the gap is made less immediate.

Operationally, the gas is loaded into the chamber 11 via a first loading valve 6 and/or a second loading valve 61.

The second valve 61 is placed along a wall of the chamber 11 adjacent to the external environment.

In the variant shown, the second loading valve 61 is placed in the wall 13; in order to allow the gas to reach the chamber 11, channels 62 are obtained inside the wall 13 itself so as to bypass the overall volume of the stem 32, which is also fixed to the wall 13.

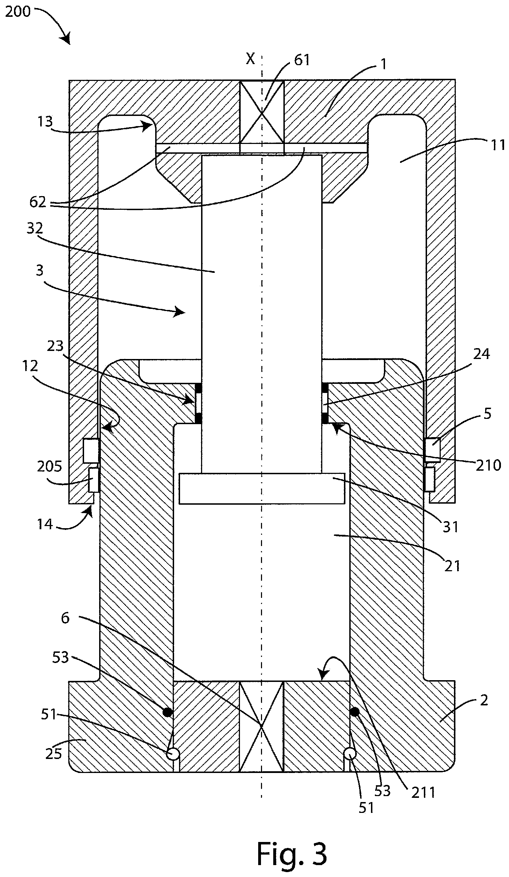

In addition, the second opening 23 may have guiding means 24 to improve the sliding of the stem 32 through it, (Figure 3); similarly, the first opening 14 may also have guiding means 205 for the sliding of the sliding element 1 on the guide 2; in this case, it is possible to obtain two distinct sliding control positions of the sliding element 1 along the axis of the guide 2, avoiding the dangerous jamming phenomenon between the sliding element 1 and the guide 2 itself due to an offset between the two elements. Contrarily indeed, the spring would get jammed, subsequently causing a dangerous uncontrolled release of the sliding element due to the increase in gas pressure inside the chamber.

The fact that this variant of the spring has two communicating chambers 11 and 21 contributes to the aforementioned objective of achieving greater efficiency and durability, spring size being equal. In fact, also thanks to this contrivance it is possible to decrease the internal pressure since it is distributed on the walls of both chambers, unlike the known technique that provides for the various compartments to remain watertight, and therefore they must withstand greater stress.

Likewise, with reference to Figure 1, it is also possible to add guiding means 105, in particular a stem guide, to the seals 5 on the internal wall 12 of the slider 1.

In addition, it is possible to drill holes in the abutments 210 so as to ensure communication between the chamber 21 of the guide 2 and the chamber 11 of the slider.

These measures, together with the distribution of the force over a larger area, which consequently significantly reduces the pressure inside the spring, are particularly advantageous from a safety point of view, minimizing the risk of accidents.

Figure 4 shows a second variant of the invention. In general, the gas spring 300 has substantially the same elements mentioned so far for the previous embodiments, which are in fact indicated by the same numerical references.

In detail, however, the seal 5 and the stem guide 305 are further protected against oil or dust infiltration by being completely recessed in the internal walls 12 of the chamber 11 of the slider 1.

This allows the cylinder surface to be exploited to the maximum, while having a lower protection 301 for the seals 5 and stem guide 305 comprising the thickness of the wall 12 itself.

The sliding element 1 is constrained to slide along the axis X between a first end, comprising the wall 13 of slider 1 itself, and a second end comprising the head 31 of the piston 3, both constrained by the abutments 210 of the upper wall of the guide 2.

The base 25 in this case is wider than the external walls 22 of the guide, but narrower than the overall dimensions of the sliding element 1 so that the lower protection 301, consisting essentially of the lower end of the wall 12, overhangs slightly from the base 25 itself.

The base 25 is also completely open at the bottom so as to accommodate a closing element 326 adapted to fit into the base 25 itself once the piston 3 has been inserted into the chamber 21.

In detail, in fact in this case the piston 3 is made in a single piece; moreover, the piston 3 has a cavity 33 that develops along the axis X.

The same technical solution just described that concerns the closing element 326 can be implemented on the wall 13 of the first chamber 11, for example in the non-claimed embodiment in Figure 3.

In this way, the gas spring becomes almost completely symmetrical in the arrangement of its parts, to the advantage of the construction simplicity and assembly of the parts.

The invention is described by way of example only, without limiting the scope of application, according to its preferred embodiments, but it shall be understood that the invention may be modified and/or adapted by experts in the field without thereby departing from the scope of the inventive concept.

## Claims

1. Gas spring (100) comprising
a first element (2),
a second element (1), and
a limit (3),
wherein the second element (1) comprises
a first chamber (11) and a first opening (14) for accessing the first chamber (11),
the first element (2) is fixable to a reference plane and comprises
a second chamber (21), a second opening (23) for accessing the second chamber (21), and external walls (22), and is inserted into the first chamber (11) of the first element (2) through the first opening (14),
wherein said first and second elements (2, 1) are movable and reciprocally slide along an axis (X),
wherein the limit (3) comprises
a stem (32) and a head (31) adapted to slide through the second opening (23) into the second chamber (21) parallel to the axis (X) so as to limit the maximum travel of the second element (1) to the extension of the external walls (22) of the first element (2),
**characterized in that**
said first and second chambers (11, 21) communicate through an existing play between said stem (32) and said second opening (23), and the second element (1) slides through the first opening (14) along the external walls (22) of the first element (2).

2. Gas spring (100) according to claim 1, **characterized in that** it comprises first sealing means or seals (5) placed between the external walls (22) of the first element (2) and a first internal surface (12) of the second element (1).

3. Gas spring (100) according to either of claims 1 or 2, **characterized in that** it comprises a first loading valve (6) for loading a gas into the spring (100), placed in a second internal surface (211) of the first element (2).

4. Gas spring (100) according to any of the previous claims, **characterized in that** the limit (3) is integral with the second element (1).

5. Gas spring (100) according to any of the previous claims, **characterized in that** it comprises first guiding means (24) for guiding the limit (3), placed between the stem (32) of the limit (3) and the second opening (23) of the first element (2), and second guiding means for guiding the second element (1), placed at the first opening (14).

6. Gas spring (100) according to any of the previous claims, **characterized in that** the second element (1) comprises a second loading valve (61).

7. Gas spring (100) according to claim 6, **characterized in that** the second element (1) comprises channels (62) for connecting the second loading valve (61) with the first chamber (11).

## Patentansprüche

1. Gasdruckfeder (100), umfassend ein erstes Element (2), ein zweites Element (1), und einen Begrenzer (3), wobei das zweite Element (1) Folgendes umfasst eine erste Kammer (11) und eine erste Öffnung (14) für einen Zugang zu der ersten Kammer (11), das erste Element (2) kann an einer Bezugsebene befestigt werden und umfasst Folgendes eine zweite Kammer (21), eine zweite Öffnung (23) für einen Zugang zu der zweiten Kammer (21) und Außenwände (22) und wird durch die erste Öffnung (14) in die erste Kammer (11) des ersten Elements (2) eingeführt, wobei das erste und das zweite Element (2, 1) beweglich sind und entlang einer Achse (X) hin- und hergleiten, wobei der Begrenzer (3) Folgendes umfasst einen Schaft (32) und einen Kopf (31), der parallel zu der Achse (X) durch die zweite Öffnung (23) in die zweite Kammer (21) gleiten kann, um den maximalen Weg des zweiten Elements (1) auf die Erstreckung der Außenwände (22) des ersten Elements (2) zu begrenzen, **dadurch gekennzeichnet, dass** die erste und die zweite Kammer (11, 21) durch ein vorhandenes Spiel zwischen dem Schaft (32) und der zweiten Öffnung (23) in Verbindung sind und das zweite Element (1) entlang der Außenwände (22) des ersten Elements (2) durch die erste Öffnung (14) gleitet.

2. Gasdruckfeder (100) nach Anspruch 1, **dadurch gekennzeichnet, dass** sie erste Dichtungseinrichtungen oder Dichtungen (5) umfasst, die zwischen den Außenwänden (22) des ersten Elements (2) und einer ersten Innenfläche (12) des zweiten Elements (1) angeordnet sind.

3. Gasdruckfeder (100) nach einem der Ansprüche 1 oder 2, **dadurch gekennzeichnet, dass** sie ein erstes Ladeventil (6) zum Laden eines Gases in die Feder (100) umfasst, das in einer zweiten Innenfläche (211) des ersten Elements (2) platziert ist.

4. Gasdruckfeder (100) nach einem der vorherigen Ansprüche, **dadurch gekennzeichnet, dass** der Begrenzer (3) einstückig mit dem zweiten Element (1) ist.

5. Gasdruckfeder (100) nach einem der vorherigen Ansprüche, **dadurch gekennzeichnet, dass** sie erste Führungseinrichtungen (24) zum Führen des Begrenzers (3), der zwischen dem Schaft (32) des Begrenzers (3) und der zweiten Öffnung (23) des ersten Elements (2) platziert sind, und zweite Führungseinrichtungen zum Führen des zweiten Elements (1), die an der ersten Öffnung (14) platziert sind, umfasst.

6. Gasdruckfeder (100) nach einem der vorherigen Ansprüche, **dadurch gekennzeichnet, dass** das zweite Element (1) ein zweites Ladeventil (61) umfasst.

7. Gasdruckfeder (100) nach Anspruch 6, **dadurch gekennzeichnet, dass** das zweite Element (1) Kanäle (62) zum Verbinden des zweiten Ladeventils (61) mit der ersten Kammer (11) umfasst.

## Revendications

1. Ressort à gaz (100) comprenant un premier élément (2), un deuxième élément (1), et une limite (3), dans lequel le deuxième élément (1) comprend une première chambre (11) et une première ouverture (14) pour accéder à la première chambre (11), le premier élément (2) peut être fixé à un plan de référence et comprend une seconde chambre (21), une seconde ouverture (23) pour accéder à la seconde chambre (21) et des parois externes (22), et est inséré dans la première chambre (11) du premier élément (2) à travers la première ouverture (14), dans lequel lesdits premier et second éléments (2, 1) sont mobiles et coulissent en va-et-vient le long d'un axe (X), dans lequel la limite (3) comprend une tige (32) et une tête (31) adaptées pour coulisser à travers la deuxième ouverture (23) dans la deuxième chambre (21) parallèlement à l'axe (X) de manière à limiter la course maximale du deuxième élément (1) au prolongement des parois externes (22) du premier élément (2), **caractérisé en ce que** lesdites première et seconde chambres (11, 21) communiquent à travers un jeu existant entre ladite tige (32) et ladite seconde ouverture (23), et le second élément (1) coulisse à travers la première ouverture (14) le long des parois externes (22) du premier élément (2).

2. Ressort à gaz (100) selon la revendication 1, **caractérisé en ce qu'**il comprend des premiers moyens d'étanchéité ou joints (5) placés entre les parois externes (22) du premier élément (2) et une première surface interne (12) du deuxième élément (1).

3. Ressort à gaz (100) selon l'une quelconque des revendications 1 ou 2, **caractérisé en ce qu'**il comprend une première soupape de chargement (6) pour charger un gaz dans le ressort (100), placée dans une deuxième surface interne (211) du premier élément (2).

4. Ressort à gaz (100) selon l'une quelconque des revendications précédentes, **caractérisé en ce que** la limite (3) est solidaire du deuxième élément (1).

5. Ressort à gaz (100) selon l'une quelconque des revendications précédentes, **caractérisé en ce qu'**il comprend des premiers moyens de guidage (24) pour guider la butée (3), placés entre la tige (32) de la butée (3) et la deuxième ouverture (23) du premier élément (2), et des deuxièmes moyens de guidage pour guider le deuxième élément (1), placés au niveau de la première ouverture (14).

6. Ressort à gaz (100) selon l'une quelconque des revendications précédentes, **caractérisé en ce que** le deuxième élément (1) comprend une deuxième soupape de chargement (61).

7. Ressort à gaz (100) selon la revendication 6, **caractérisé en ce que** le deuxième élément (1) comprend des canaux (62) pour relier la deuxième soupape de chargement (61) à la première chambre (11).
